(19)

Europäisches
Patentamt
European
Patent Office
Office européen
des brevets

(11) **EP 3 968 236 A1**

(12) **EUROPEAN PATENT APPLICATION**

(43) Date of publication:
**16.03.2022 Bulletin 2022/11**

(21) Application number: **21190943.7**

(22) Date of filing: **12.08.2021**

(51) International Patent Classification (IPC):
**G06N 3/04** (2006.01)        **G06N 3/08** (2006.01)

(52) Cooperative Patent Classification (CPC):
**G06N 3/0454; G06N 3/084**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2020 US 202017010721**

(71) Applicant: **SAP SE**
**69190 Walldorf (DE)**

(72) Inventors:
• **KLEIN, Tassilo**
  **69190 Walldorf (DE)**
• **NABI, Moin**
  **69190 Walldorf (DE)**

(74) Representative: **Müller-Boré & Partner**
**Patentanwälte PartG mbB**
**Friedenheimer Brücke 21**
**80639 München (DE)**

(54) **COLLABORATIVE LEARNING OF QUESTION GENERATION AND QUESTION ANSWERING**

(57)    A method may include training a first machine learning model to perform a question generation task and a second machine learning model to perform a question answering task. The first machine learning model and the second machine learning model may be subjected to a collaborative training in which a first plurality of weights applied by the first machine learning model generating one or more questions are adjusted to minimize an error in an output of the second machine learning model answering the one or more questions. The first machine learning model and the second machine learning model may be deployed to perform a natural language processing task that requires the first machine learning model to generate a question and/or the second machine learning model to answer a question. Related methods and articles of manufacture are also disclosed.

100

Machine Learning
Controller 110

| ML Model 115a | ML Model 115b |

NLP Engine 120

NLP App 125

Network 140

Client 130

**FIG. 1**

EP 3 968 236 A1

**Description**

**FIELD**

The present disclosure generally relates to machine learning and more specifically to collaborative training for machine learning enabled question generation and question answering.

**BACKGROUND**

Machine learning models may be trained to perform a variety of cognitive tasks. For example, a machine learning model trained to perform natural language processing may classify text by at least assigning, to the text, one or more labels indicating a sentiment, a topic, and/or an intent associated with the text. Training the machine learning model to perform natural language processing may include adjusting the machine learning model to minimize the errors present in the output of the machine learning model. For instance, training the machine learning model may include adjusting the weights applied by the machine learning model in order to minimize a quantity of incorrect labels assigned by the machine learning model.

**SUMMARY**

Methods, systems, and articles of manufacture, including computer program products, are provided for machine learning enabled question generation. In one aspect, there is provided a system. The system may include at least one data processor and at least one memory. The at least one memory may store instructions that result in operations when executed by the at least one data processor. The operations may include: training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and applying the collaboratively trained first machine learning model to perform the question generation task.

In some variations, one or more of the features disclosed herein including the following features can optionally be included in any feasible combination. The first plurality of weights may be adjusted by at least backpropagating the error in the output of the second machine learning model through the first machine learning model such that the one or more questions generated by the first machine learning model are answerable by the second machine learning model.

In some variations, a second performance of the first machine learning model generating the one or more questions may be evaluated based at least on a first performance of the second machine learning model answering the one or more questions generated by the first machine learning model.

In some variations, the collaborative training may include adjusting the first plurality of weights applied by the first machine learning model without adjusting a second plurality of weights applied by the second machine learning model.

In some variations, the second machine learning model may be trained continuously including by training the second machine learning model to correctly answer a question and re-training the second machine learning model to answer the question in response to the second machine learning model subsequently failing to correctly answer the question.

In some variations, the first machine learning model and the second machine learning model may be trained to perform the question answering task prior to being subjected to the collaborative training.

In some variations, the first machine learning model may perform the question generation task by at least generating, based at least on an answer and a context, one or more corresponding questions.

In some variations, the collaboratively trained second machine learning model may be applied to perform the question answering task.

In some variations, the first machine learning model may be a transformer decoder network and the second machine learning model may be a transformer encoder network.

In some variations, the first machine learning model may be a generative pretrained transformer 2 (GPT-2). The second machine learning model may be a bidirectional encoder representations from transformers (BERT) model.

In another aspect, there is provided a method for machine learning enabled question generation. The method may include: training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and applying the collaboratively trained first machine learning model to perform the question generation task.

In some variations, one or more of the features disclosed herein including the following features can optionally be included in any feasible combination. The first plurality of weights may be adjusted by at least backpropagating the error in the output of the second machine learning model through the first machine learning model such that the one or more questions generated by the first machine learning model are answerable by the second machine learning model.

In some variations, the method may further include evaluating, based at least on a first performance of the second machine learning model answering the one or more questions generated by the first machine learning model, a second performance of the first machine learning model generating the one or more questions.

In some variations, the collaborative training may include adjusting the first plurality of weights applied by the first machine learning model without adjusting a second plurality of weights applied by the second machine learning model.

In some variations, the second machine learning model may be trained continuously including by training the second machine learning model to correctly answer a question and re-training the second machine learning model to answer the question in response to the second machine learning model subsequently failing to correctly answer the question.

In some variations, the first machine learning model and the second machine learning model may be trained to perform the question answering task prior to being subjected to the collaborative training.

In some variations, the first machine learning model may perform the question generation task by at least generating, based at least on an answer and a context, one or more corresponding questions.

In some variations, the method may further include applying the collaboratively trained second machine learning model to perform the question answering task.

In some variations, the first machine learning model may be a transformer decoder network and the second machine learning model may be a transformer encoder network.

In another aspect, there is provided a computer program product that includes a non-transitory computer readable storage medium. The non-transitory computer-readable storage medium may include program code that causes operations when executed by at least one data processor. The operations may include: training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and applying the collaboratively trained first machine learning model to perform the question generation task.

Implementations of the current subject matter can include methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including, for example, to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to machine learning enabled question generation and question answering, it should be readily understood that such features are not intended to be limiting. The claims that follow this disclosure are intended to define the scope of the protected subject matter.

## DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,

FIG. 1 depicts a network diagram illustrating a machine learning enabled natural language process system, in accordance with some example embodiments;
FIG. 2A depicts a schematic diagram illustrating an example of a first machine learning model for performing a question generation task and a second machine learning model for performing a question answering task prior to collaborative training, in accordance with some example embodiments;

FIG. 2B depicts a schematic diagram illustrating a collaborative training of a first machine learning model to perform a question generation task and a second machine learning model to perform a question answering task, in accordance with some example embodiments;

FIG. 3 depicts examples of questions generated by a collaboratively trained machine learning model, in accordance with some example embodiments;

FIG. 4 depicts a flowchart illustrating a process for machine learning enabled question generation, in accordance with some example embodiments; and

FIG. 5 depicts a block diagram illustrating a computing system, in accordance with some example embodiments.

When practical, like labels are used to refer to same or similar items in the drawings.

## DETAILED DESCRIPTION

A machine learning model may be trained to perform a natural language processing task by at least subjecting the machine learning model to supervised learning. For example, the machine learning model may be trained to answer questions (e.g., closed domain questions, open domain questions, and/or the like), which may require the machine learning model to identify the type of question before retrieving information relevant to answering each question. Alternatively and/or additionally, the machine learning model may be trained to generate questions, in which case the machine learning model may generate questions that correspond to the answers and contexts provided as input to the machine learning model. However, training the machine learning model for optimal performance may require a large corpus of labeled training samples, each of which including text and at least one ground truth label corresponding to a correct label for the text. Because generating a sufficiently large corpus of labeled training samples may require excessive resources, training the machine learning model in a supervised manner may often be impracticable.

An intrinsic relationship may exist between the task of question generation and the task of question answer. In some example embodiments, this intrinsic relationship may be exploited by at least subjecting a first machine learning model performing a question generation task and a second machine learning model performing a question answering task to collaborative training. For example, the first machine learning model may be trained to perform the question generation task by at least minimizing the errors present in the answers output by the second machine learning model responding to the questions generated by the first machine learning model. Subjecting the first machine learning model and the second machine learning model to collaborative training may maximize the respective performances of the first machine learning model performing the question generation task and the second machine learning model performing the question answering task. Moreover, collaboratively training the first machine learning model and the second machine learning model may reduce the quantity of labeled training samples required to achieve optimal performance.

In some example embodiments, the first machine learning model trained to perform the question generation task and the second machine learning model trained to perform the question answering task may be implemented using variants of a self-attention transformer network. For example, the first machine learning model performing the question generation task may be implemented using a transformer decoder network (e.g., generative pretrained transformer 2 (GPT-2) and/or the like) while the second machine learning model performing the question answering task may be implemented using a transformer encoder network (e.g., a bidirectional encoder representations from transformers (BERT) model and/or the like). The transformer decoder network and the transformer encoder network may be fine-tuned in tandem in an end-to-end manner including by adjusting the weights applied by the transformer decoder network when generating questions in order to minimize the errors in the corresponding answers output by the transformer encoder network.

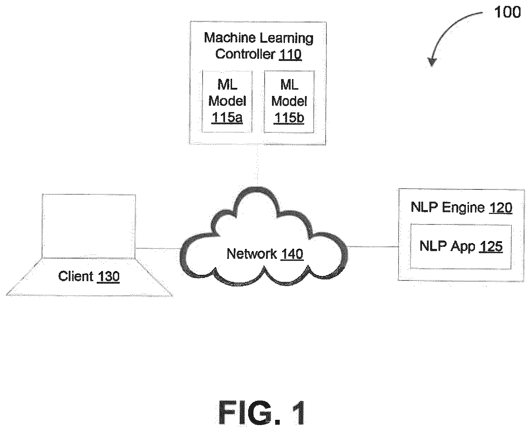

FIG. 1 depicts a system diagram illustrating an example of a machine learning enabled natural language processing system 100, in accordance with some example embodiments. Referring to FIG. 1, the machine learning enabled natural language processing system 100 may include a machine learning controller 110, a natural language processing engine 120, and a client 130. The machine learning controller 110, the natural language processing engine 120, and the client 130 may be communicatively coupled via a network 140. It should be appreciated that the client 130 may be a processor-based device including, for example, a smartphone, a tablet computer, a wearable apparatus, a virtual assistant, an Internet-of-Things (IoT) appliance, and/or the like. The network 140 may be a wired network and/or a wireless network including, for example, a wide area network (WAN), a local area network (LAN), a virtual local area network (VLAN), a public land mobile network (PLMN), the Internet, and/or the like.

In some example embodiments, the machine learning controller 110 may train a first machine learning model 115a to perform a question generation task and a second machine learning model 115b to perform a question answering task. The machine learning controller 110 may train the first machine learning model 115a and the second machine learning model 115b collaboratively in order to reduce the quantity of labeled training samples required to achieve optimal performance for the question generation task as well as the question answering task. For example, the collaborative training of the first machine learning model 115a and the second machine learning model 115b may include adjusting the weights applied by the first machine learning model 115a when generating questions in order to minimize the errors present in the answers output by the second machine learning model 115b responding to the questions generated by the first machine learning model 115a. Moreover, instead of evaluating the performance of the first machine learning model 115a, for example, the quality of the questions generated by the first machine learning model 115a, by comparing these questions to ground truth questions, the performance of the first machine learning model 115a may be gauged based on a performance of the second machine learning model 115b answering the questions generated by the first machine learning model 115a.

Once trained, the machine learning controller 110 may apply the first machine learning model 115a to perform a question generation task and/or the second machine learning model 115b to perform a question answering task. Alternatively and/or additionally, the first machine learning model 115a and the second machine learning model 115b may be deployed, to the natural language processing engine 120, to perform a question generation task and/or a question answering task associated with, for example, a natural language processing application 125. For instance, the natural language processing engine 120 may receive, from the client 130, a request to perform a natural language processing task. In response to the request from the client 130, the natural language processing engine 120 may apply the first machine learning model 115a to generate a question and/or the second machine learning model 115b to answer a question.

In some example embodiments, the first machine learning model 115a and the second machine learning model 115b may be implemented using variants of a self-attention transformer network. For example, the first machine learning model 115a performing the question generation task may be implemented using a transformer decoder network (e.g., generative pretrained transformer 2 (GPT-2) and/or the like) while the second machine learning model 115b performing the question answering task may be implemented using a transformer encoder network (e.g., a bidirectional encoder representations from transformers (BERT) model and/or the like). The transformer decoder network and the transformer encoder network may be fine-tuned in tandem in an end-to-end manner including by adjusting the weights applied by the transformer decoder network when generating questions in order to minimize the errors in the corresponding answers output by the transformer encoder network.

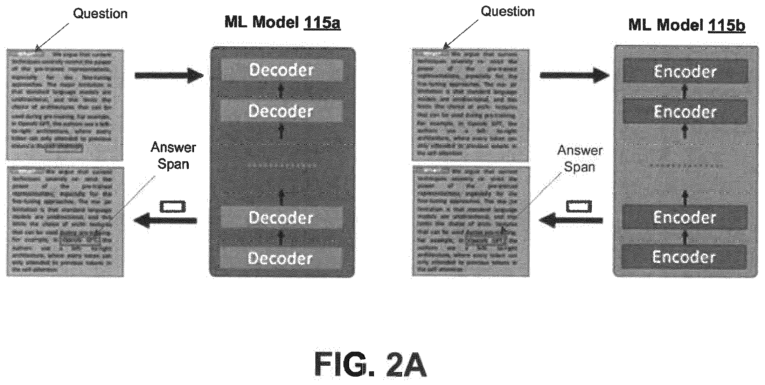

To further illustrate, FIGS. 2A-B depicts a schematic diagram illustrating the collaborative training of the first machine learning model 115a and the second machine learning model 115b, in accordance with some example embodiments. Referring to FIGS. 1 and 2A-B, the first machine learning model 115a and the second machine learning model 115b may be variants of a self-attention transformer network. In some example embodiments, the first machine learning model 115a and the second machine learning model 115b may be subjected to supervised pre-training, for example, to perform an question answering task before the first machine learning model 115a is fine-tuned to perform the question generation task and the second machine learning model 115b is fine-tuned to perform the question answering task. The pre-training of the first machine learning model 115a and the second machine learning model 115b is depicted in FIG. 2A. Referring to FIG. 2A, the first machine learning model 115a and the second machine learning model 115b may be trained individually to answer questions using a question answering head configured to assign probabilities to each token at a start and/or an end of an answer span. The solid rectangular boxes shown in FIG. 2A may denote the question whereas the hollow rectangular boxes may annotate the answer span returned by each of the first machine learning model 115a and the second machine learning model 115b.

In some example embodiments, the first machine learning model 115a may be implemented using a transformer decoder network (e.g., generative pretrained transformer 2 (GPT-2) and/or the like), which may be a traditional language model capable of predicting, based on one or more previous words in a word sequence, one or more subsequent words the word sequence. Contrastingly, the second machine learning model 115b may be implemented using a transformer encoder network (e.g., a bidirectional encoder representations from transformers (BERT) model and/or the like), which may be a masked language model capable of predicting a masked out word in a word sequence based on a context to the left of the masked out word and a context to the right of the masked out word. Moreover, the transformer encoder network implementing the second machine learning model 115b may be capable of generating context specific word embeddings, which lends the second machine learning model 115b to being fine-tuned for a variety of downstream tasks such as the question answering task.

For the question generation task performed by the first machine learning model 115a, given the natural sequential ordering of the language model, Equation (1) below shows that the joint probability of a sequence $s = (s_1,...,s_n)$ may be factorized into a product of conditional probabilities. This factorization may permit the application of an efficient sampling strategy such as sequential top-$k$ in which the first machine learning model 115a computes the probability of a word being a subsequent word in the word sequence over an entire vocabulary before a random sampling is performed from a $k$ quantity of the most-likely candidates. The sampling may be discontinued when a maximum sequence length is reached or when a terminal symbol is produced (e.g. the terminal symbol "?" for questions).

$$p(s) = \prod_i^n p(s_n | s_1, \ldots, s_{n-1}) \tag{1}$$

The first machine learning model 115a, for example, the transformer decoder network (e.g., generative pre-trained transformer 2 (GPT-2) and/or the like), may require fine-tuning in order to perform the question generation task. The fine-tuning may include the first machine learning model 115a performing a conditional generation of questions given an annotated answer. For example, during this training phase, the first machine learning model 115a may be provided a question context c along with an $l$ quantity of answer-question tuples $(a_i, q_i)$, wherein the value of $l$ may vary from context to context, $a_i$ may denote the ground truth answer, and $q_i$ may denote the ground truth question. Furthermore, the length for the ground truth answer $a_i$ may be denoted as $m_i = |q_i|$. The optimization of the first machine learning model 115a may include maximizing the likelihood Q over all contexts c and the corresponding tuple sets $(a_i, q_i)$ as expressed in Equation (2) below.

$$X = \bigcup_{1,\ldots,u} \{(q_1, a_1), \ldots, (q_k, a_k)\} \tag{2}$$

wherein u may denote the context cardinality.

Factorizing over all contexts c may yield Equation (3) below, where in contrast to Equation (1), conditioning may be extended by a context $c_k$ and a specific answer in the context $a_{k,j}$.

$$Q = \prod_k^u \prod_k^{l_k} \prod_i^{m_{k,j}} p\left(s_{m_{k,j}} | s_1, \ldots, s_{k,m_j}; c_k, a_{k,j}\right) \tag{3}$$

While the first machine learning model 115a may be fine-tuned to perform a rudimentary question generation task, further boost to the performance of the first machine learning model 115a may be achieved by training the first machine learning model 115a collaboratively with the second machine learning model 115b performing a complementary question answering task. For example, in some example embodiments, the collaborative training of the first machine learning model 115a and the second machine learning model 115b may include adjusting the weights applied by the first machine learning model 115a when generating questions in order to minimize the errors present in the answers output by the second machine learning model 115b responding to the questions generated by the first machine learning model 115a. That is, the weights applied by the first machine learning model 115 may be adjusted by at least backpropagating, through the first machine learning model 115, the error that is present in the output of the second machine learning model 115b such that the questions generated by the first machine learning model 115a are answerable by the second machine learning model 115b.

While the second machine learning model 115b may operate statically to perform the question answering task, the first machine learning model 115a may operate to generate questions that improve over time based on the output of the second machine learning model 115b performing the question answering task. Accordingly, while the weights applied by the first machine learning model 115a may be adjusted through backpropagation of errors (or another optimization technique), the weights applied by the second machine learning model 115b may remain unchanged during this collaborative training. Although the weights of the second machine learning model 115b may also be adjusted during collaborative training, for example, through backpropagation of errors, doing so may increase the risk of drift and unstable behavior (e.g., loss oscillations and/or the like) that renders regularization a non-trivial endeavor.

The first machine learning model 115a may be trained collaboratively with the second machine learning model 115b to perform the question generation task by at least generating a question for a given context. The context may be endowed with the question generated by the first machine learning model 115a (without answer annotation) before being given to the second machine learning model 115b as a basis for the question answering task. In response, the second machine learning model 115b may generate an answer span, which is compared to the ground truth in order to evaluate the quality of the question generated by the first machine learning model 115a.

Errors in the output of the second machine learning model 115b may include the second machine learning model 115b being unable to answer the question generated by the first machine learning model 115a, for example, by yielding an incorrect answer span, may indicate that the question generated by the first machine learning model 115a exhibits a sub-optimal wording and/or a semantic mismatch. This error may be backpropagated through the first machine learning model 115a, which effectively divides the tuple set $X$ from Equation (2) as part of optimizing the first machine learning model 115a. Equation (4) below shows the division of the tuple set $X$.

$$X = X_{-a} \cup X_a \text{ s.t. } X_{-a} \cap X_a = \emptyset \tag{4}$$

In Equation (4) above, the set $X_{-a}$ may include the contexts and answers of the questions that the second machine learning model 115b is unable to answer while the other set $X_a$ may include the contexts and answers of the questions that the second machine learning model 115b is able to answer. Accordingly the sets $X_{-a}$ and $X_a$ may represent a performance snapshot of the first machine learning model 115a performing the question generation task at a current iteration. During each round of optimization, the weights of the first machine learning model 115a may be adjusted to reduce the cardinality of the set $X_{-a}$ (e.g., minimize $|X_{-a}|$), thereby minimizing the quantity of questions that the second machine learning model 115b answers incorrectly. At the same time, in order to avoid catastrophic forgetting, the second machine learning model 115b may be subjected to continual learning in which the second machine learning model 115b is continuously probed for questions that the second machine learning model 115b answered correctly during previous iterations. For example, the second machine learning model 115b may be probed by a continuous sampling from the set $X_a$ which, as noted, includes the contexts and answers of the questions that the second machine learning model 115b is able to answer correctly, in an effort to maximize the cardinality of the set $X_a$. In the event the second machine learning model 115b fails to answer a question from the set $X_a$, the second machine learning model 115b is re-trained to answer that question by at least moving the question to the set $X_{-a}$ such that at any time $X_{-a} \cap X_a = 0$.

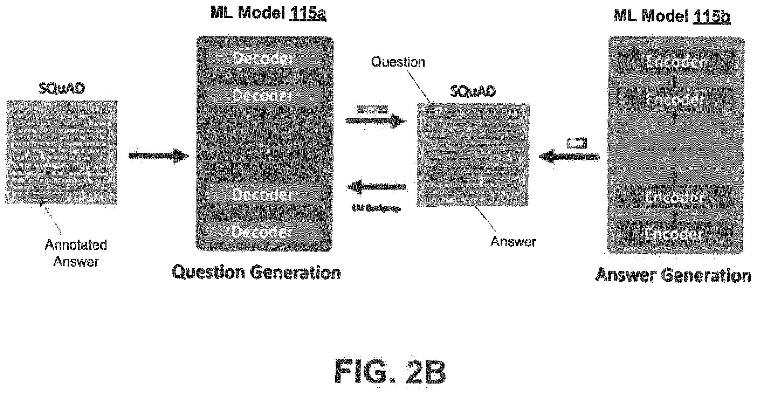

FIG. 2B depicts the collaborative training of the first machine learning model 115a and the second machine learning model 115b. In particular, FIG. 2B depicts the fine-tuning of the first machine learning model 115a to perform the question generation task and the second machine learning model 115b to perform the question answering task. As noted, this fine-tuning may occur after the first machine learning model 115a and the second machine learning model 115b have been pre-trained to perform the question answering task. For example, as shown in FIG. 2B, given a context from the Stanford Question Answering Dataset (SQuAD) and an annotated answer (denote by the hollow box), the first machine learning model 115a may generate a corresponding question, denoted by the solid box in FIG. 2B. The SQuAD context endowed with the question generated by the first machine learning model 15a may be passed to the second machine learning model 115b, which may generate the respond by generating the corresponding answer (denoted by the other hollow box). In the event the second machine learning model 115b is unable to generate a correct answer for the question generated by the first machine learning model 115a, this error (or loss) may be backpropagated through the first machine learning model 115a with respect to corresponding SQuAD context.

The performance of the first machine learning model 115a, for example, the quality of the questions generated by the first machine learning model 115a, may be assessed based on the Stanford Question Answering Dataset (SQuAD). The Stanford Question Answering Dataset may include a collection of more than one hundred thousand pairs of questions and answers, which may be divided into two portions. The first portion of the Stanford Question Answering Dataset may be used to pre-train the first machine learning model 115a and the second machine learning model 115b to perform the question answering task. The second portion of the Stanford Question Answering Dataset may be used to evaluate the performance of the first machine learning model second half (SP1) is used for evaluation purposes.

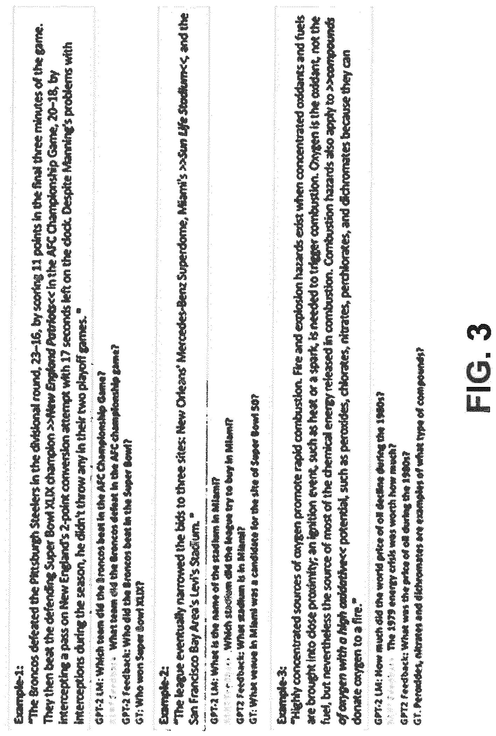

FIG. 3 depicts the qualitative results of the questions generated by the first machine learning model 115a. As shown in FIG. 3, the first machine learning model 115a may generate questions having high diversity and exhibiting significant difference relative to the ground truth. Generated sentences have high diversity and differ significantly from ground truth. Nevertheless, the first machine learning model 115a may be capable of generating high quality questions despite being trained without a large quantity of labeled training samples. Moreover, when trained collaboratively, the first machine learning model 115a may generate higher quality questions than a conventionally trained machine learning model, thereby indicating that the performance of the first machine learning model 115a may be optimized through the collaborative training with the second machine learning model 115b. For example, the collaborative training, in which the first machine learning model 115a and the second machine learning model 115b are coupled in a feedback loop, may provide additional language cues attributable to the strength of the context-specific embeddings of the second machine learning model 115b allowing for the establishment of complex relationships in sentences as well as rich semantic representation that can be exploited during the question answering task.

In some example embodiments, the performance of the first machine learning model 115a, for example, the quality of the questions generated by the first machine learning model 115a, may be evaluated based on the performance of the second machine learning model 115b answering the questions generated by the first machine learning model 115a. Conventional metrics for evaluating the quality of the questions generated by the first machine learning model 115a, such as the BLEU and ROUGE metrics shown in Table 1 below, may rely on a comparison to ground truth questions. Unlike these conventional metrics, using the performance of the second machine learning model 115b as a surrogate metric for the quality of the questions generated by the first machine learning model 115a may account for questions that exhibit linguistic variability but remains semantically admissible. For example, as shown in FIG. 3, the question "What team did the broncos defeat in the AFC championship game?" may be an acceptable question for the answer "New England Patriots" and the specific context. Nevertheless, this question may score low when evaluated based on a comparison to the ground truth question "Who won Super Bowl XLIX?" As such, adoption of the surrogate metric may permit the generation of a greater diversity of questions that are not necessarily linguistically identical to the ground truth questions.

Table 1

| Method | BLEU-1 | BLEU-2 | BLEU-3 | BLEU-4 | ROGUE-L |
|---|---|---|---|---|---|
| QA-QG-Dual (Tang et al. 2017a) | - | - | - | 5.03 | - |
| LM-init (Radford et al. 2019) | 24.85 | 17.85 | 11.06 | 6.85 | 33.56 |
| Our Proposed Method | **31.46** | **19.50** | **12.41** | **7.84** | **34.51** |

Table 2 below depicts the performance of the first machine learning model 115a, which may be trained collaboratively with the second machine learning model 115b. As shown in FIG. 2, the performance of the collaboratively trained first machine learning model 115a performing the question generation task may reach ground truth benchmark performance. This strong performance suggests that the first machine learning model 115a may be capable of generating a diverse spectrum of questions that are also semantically correct.

Table 2

| Method | EM | F1 |
|---|---|---|
| Supervised (Upper-bound) | 79.60 | 87.30 |
| LM-init (Radford et al. 2019) | 67.51 | 77.15 |
| Our Method (*GPT-2*) | 70.61 | 79.73 |
| Our Method (*BERT*) | **75.37** | **84.42** |

The ability of the first machine learning model 115a in generating semantically diverse questions may be evaluated by providing the second machine learning model 115b with additional ground truth data. For example, the second machine learning model 115b may be trained on the entire Stanford Question Answering Dataset (SQuAD) with half of the dataset being fully supervised (e.g., including pairings of corresponding questions and answers) and the other half of the dataset not annotated with the questions. The first machine learning model 115a may be applied to generate the questions corresponding to the unannotated answers included in the second half of the dataset. Evaluating the performance of the first machine learning model 115a may verify whether the semantic diversity of the questions generated by the first machine learning model 115a may benefit from the presence of ground truth data..

Table 3 below depicts the performance of the second machine learning model 115b using the questions generated by the first machine learning model 115a may be close to the fully supervised baseline, in which the second machine learning model 115b is trained in a fully supervised manner. The small margin between the performance of the collaboratively trained second machine learning model 115b and the fully supervised baseline suggests the collaborative training may be suitable in instances where a large quantity of labeled training samples is unavailable.

Table 3

| Method | EM | F1 |
|---|---|---|
| Supervised (Upper-bound) | 80.80 | 88.50 |
| LM-init (Radford et al. 2019) | 67.51 | 77.15 |
| Our Method | **78.47** | **86.41** |

The performance of the first machine learning model 115a and the second machine learning model 115b may also be evaluated in a semi-supervised setup at various labeling rates (e.g., 10%, 20%, 50%, 90%, and/or the like). The results are shown in Table 4 below, which indicate that the collaboratively trained first machine learning model 115a and the second machine learning model 115b may output perform conventionally trained machine learning models at any labeling rate. The margin between performances may be higher at higher labeling rates. However, the first machine learning model 115a and the second machine learning model 115b may perform well even at low labeling rates.

Table 4

| Labeling rate | Method | Dev F1 | Test F1 | Test EM |
|---|---|---|---|---|
| 0.1 | Gen + GAN (Ganin and Lempitsky 2015) | 0.4897 | 0.4373 | 0.2885 |
| 0.1 | Gen + dual (He et al. 2016) | 0.5036 | 0.4555 | 0.3005 |

(continued)

| Labeling rate | Method | Dev F1 | Test F1 | Test EM |
|---|---|---|---|---|
| 0.1 | Gen + domain (Yang et al. 2017) | 0.5234 | 0.4703 | 0.3145 |
| 0.1 | Gen + domain + adv (Yang et al. 2017) | 0.5313 | 0.4802 | 0.3218 |
| 0.1 | Our Proposed Method | **0.6931** | 0.6391 | **0.4741** |
| 0.2 | Gen + GAN (Ganin and Lempitsky 2015) | 0.5525 | 0.5037 | 0.3470 |
| 0.2 | Gen + dual (He et al. 2016) | 0.5720 | 0.5192 | 0.3612 |
| 0.2 | Gen + domain (Yang et al. 2017) | 0.5749 | 0.5216 | 0.3658 |
| 0.2 | Gen + domain + adv (Yang et al. 2017) | 0.5867 | 0.5394 | 0.3781 |
| 0.2 | Our Proposed Method | **07614** | **0.7053** | **0.5476** |
| 0.5 | Gen + GAN (Ganin and Lempitsky 2015) | 0.6110 | 0.5590 | 0.4044 |
| 0.5 | Gen + dual (He et al. 2016) | 0.6368 | 0.5746 | 0.4163 |
| 0.5 | Gen + domain (Yang et al. 2017) | 0.6378 | 0.5826 | 0.4261 |
| 0.5 | Gen + domain + adv (Yang et al. 2017) | 0.6375 | 0.5831 | 0.4267 |
| 0.5 | Our Proposed Method | **0.8185** | **0.7564** | **0.6056** |
| 0.9 | Gen + GAN (Ganin and Lempitsky 2015) | 0.6396 | 0.5874 | 0.4317 |
| 0.9 | Gen + dual (He et al. 2016) | 0.6511 | 0.5892 | 0.4340 |
| 0.9 | Gen + domain (Yang et al. 2017) | 0.6611 | 0.6102 | 0.4573 |
| 0.9 | Gen + domain + adv (Yang et al. 2017) | 0.6585 | 0.6043 | 0.4497 |
| 0.9 | Our Proposed Method | **0.8409** | **0.7755** | **0.6282** |

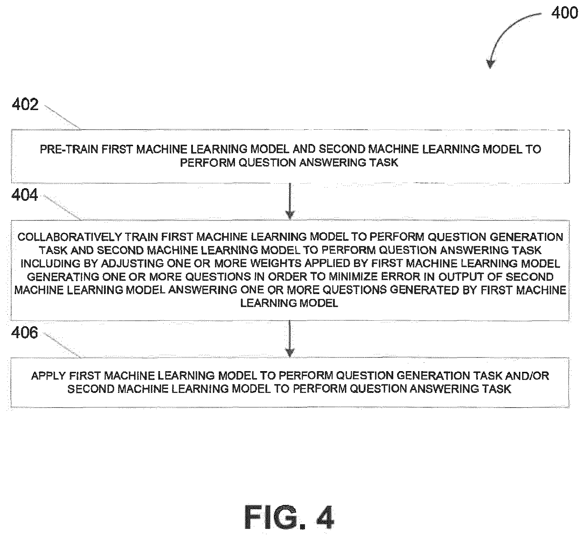

FIG. 4 depicts a flowchart illustrating a process 400 for machine learning model enabled question generation, in accordance with some example embodiments. Referring to FIGS. 1A-B, 2A-B, 3, and 4, the process 400 may be performed by the machine learning controller 110.

At 402, the machine learning controller 110 may pre-train the first machine learning model 115a and the second machine learning model 115b to perform a question answering task. In some example embodiments, the first machine learning model 115a and the second machine learning model 115b may be subjected to supervised pre-training, for example, to perform an question answering task before the first machine learning model 115a is fine-tuned to perform the question generation task and the second machine learning model 115b is fine-tuned to perform the question answering task.

At 404, the machine learning controller 110 may collaboratively train the first machine learning model 115a to perform a question generation task and the second machine learning model 115b to perform the question answering task including by adjusting one or more weights applied by the first machine learning model 115a generating one or more questions in order to minimize an error in an output by the second machine learning model 115b answering the one or more questions generated by the first machine learning model 115a. In some example embodiments, once the first machine learning model 115a is pre-trained to perform the question answering task, the first machine learning model 115a may still require fine-tuning in order to perform a question generation task. The fine-tuning may include the first machine learning model 115a performing the question generation task to generate one or more questions, which are then answered by the second machine learning model 115b performing the question answering task.

The fine-tuning of the first machine learning model 115a may include adjusting the weights applied by the first machine learning model 115a performing the question generation task such that the error present in the output of the second machine learning model 115b performing the question answering task is minimized. For example, the weights applied by the first machine learning model 115a may be adjusted through backpropagation of the error (or another optimization technique) present in the output of the second machine learning model 115b. As noted, while the weights applied by the first machine learning model 115a may be adjusted during this fine-tuning, the weights applied by the second machine learning model 115b may remain static to prevent drift and unstable behavior (e.g., loss oscillations and/or the like) that renders regularization a non-trivial endeavor.

At 406, the machine learning controller 110 may apply the first machine learning model 115a to perform the question generation task and/or the second machine learning model 115b to perform the question answering task. In some example embodiments, once trained, the machine learning controller 110 may apply the first machine learning model 115a to perform the question generation task and/or the second machine learning model 115b to perform the question answering task. Alternatively and/or additionally, the trained first machine learning model 115 and/or the trained second machine learning model 115b may be deployed, for example, to the natural language processing engine 120 in order to perform a question generation task and/or a question answering task associated with the natural language processing application 125. For example, the natural language processing engine 120 may receive, from the client 130, a request to perform a natural language processing task. In response to the request from the client 130, the natural language processing engine 120 may apply the first machine learning model 115a to generate a question and/or the second machine learning model 115b to answer a question.

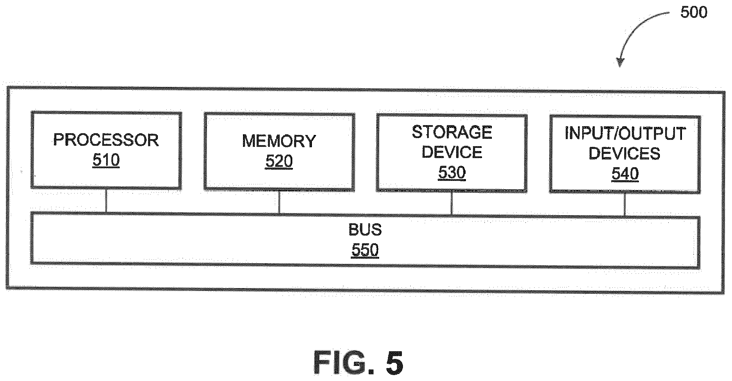

FIG. 5 depicts a block diagram illustrating a computing system 500, in accordance with some example embodiments. Referring to FIGS. 1A and 5, the computing system 500 can be used to implement the machine learning controller 110, the natural language processing engine 120, and/or any components therein.

As shown in FIG. 5, the computing system 500 can include a processor 510, a memory 520, a storage device 530, and input/output devices 540. The processor 510, the memory 520, the storage device 530, and the input/output devices 540 can be interconnected via a system bus 550. The processor 510 is capable of processing instructions for execution within the computing system 500. Such executed instructions can implement one or more components of, for example, the machine learning controller 110 and the natural language processing engine 120. In some implementations of the current subject matter, the processor 510 can be a single-threaded processor. Alternately, the processor 510 can be a multi-threaded processor. The processor 510 is capable of processing instructions stored in the memory 520 and/or on the storage device 530 to display graphical information for a user interface provided via the input/output device 540.

The memory 520 is a computer readable medium such as volatile or non-volatile that stores information within the computing system 500. The memory 520 can store data structures representing configuration object databases, for example. The storage device 530 is capable of providing persistent storage for the computing system 500. The storage device 530 can be a floppy disk device, a hard disk device, an optical disk device, or a tape device, or other suitable persistent storage means. The input/output device 540 provides input/output operations for the computing system 500. In some implementations of the current subject matter, the input/output device 540 includes a keyboard and/or pointing device. In various implementations, the input/output device 540 includes a display unit for displaying graphical user interfaces.

According to some implementations of the current subject matter, the input/output device 540 can provide input/output operations for a network device. For example, the input/output device 540 can include Ethernet ports or other networking ports to communicate with one or more wired and/or wireless networks (e.g., a local area network (LAN), a wide area network (WAN), the Internet).

In some implementations of the current subject matter, the computing system 500 can be used to execute various interactive computer software applications that can be used for organization, analysis and/or storage of data in various (e.g., tabular) format (e.g., Microsoft Excel®, and/or any other type of software). Alternatively, the computing system 500 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities (e.g., SAP Integrated Business Planning add-in for Microsoft Excel as part of the SAP Business Suite, as provided by SAP SE, Walldorf, Germany) or can be standalone computing products and/or functionalities. Upon activation within the applications, the functionalities can be used to generate the user interface provided via the input/output device 540. The user interface can be generated and presented to a user by the computing system 500 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. For example, the logic flows may include different and/or additional operations than shown without departing from the scope of the present disclosure. One or more operations of the logic flows may be repeated and/or omitted without departing from the scope of the present disclosure. Other implementations may be within the scope of the following claims.

**Claims**

1. A system, comprising:

   at least one data processor; and
   at least one memory storing instructions which, when executed by the at least one data processor, result in operations comprising:

   training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and
   applying the collaboratively trained first machine learning model to perform the question generation task.

2. The system of claim 1, wherein the first plurality of weights are adjusted by at least backpropagating the error in the output of the second machine learning model through the first machine learning model such that the one or more questions generated by the first machine learning model are answerable by the second machine learning model.

3. The system of claim 1 or claim 2, further comprising:
   evaluating, based at least on a first performance of the second machine learning model answering the one or more questions generated by the first machine learning model, a second performance of the first machine learning model generating the one or more questions.

4. The system of any one of the preceding claims, wherein the collaborative training includes adjusting the first plurality of weights applied by the first machine learning model without adjusting a second plurality of weights applied by the second machine learning model; and/or
   wherein the second machine learning model is trained continuously including by training the second machine learning model to correctly answer a question and re-training the second machine learning model to answer the question in response to the second machine learning model subsequently failing to correctly answer the question.

5. The system of any one of the preceding claims, wherein the first machine learning model and the second machine learning model are trained to perform the question answering task prior to being subjected to the collaborative training; and/or

wherein the first machine learning model performs the question generation task by at least generating, based at least on an answer and a context, one or more corresponding questions.

6. The system of any one of the preceding claims, further comprising applying the collaboratively trained second machine learning model to perform the question answering task.

7. The system of any one of the preceding claims, wherein the first machine learning model comprises a transformer decoder network, and wherein the second machine learning model comprises a transformer encoder network.

8. The system of any one of the preceding claims, wherein the first machine learning model comprises a generative pretrained transformer 2 (GPT-2), and wherein the second machine learning model comprises a bidirectional encoder representations from transformers (BERT) model.

9. A computer-implemented method, comprising:

training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and

applying the collaboratively trained first machine learning model to perform the question generation task.

10. The method of claim 9, wherein the first plurality of weights are adjusted by at least backpropagating the error in the output of the second machine learning model through the first machine learning model such that the one or more questions generated by the first machine learning model are answerable by the second machine learning model.

11. The method of claim 9 or claim 10, further comprising:
evaluating, based at least on a first performance of the second machine learning model answering the one or more questions generated by the first machine learning model, a second performance of the first machine learning model generating the one or more questions.

12. The method of any one of claims 9 to 11, wherein the collaborative training includes adjusting the first plurality of weights applied by the first machine learning model without adjusting a second plurality of weights applied by the second machine learning model; and/or

wherein the second machine learning model is trained continuously including by training the second machine learning model to correctly answer a question and re-training the second machine learning model to answer the question in response to the second machine learning model subsequently failing to correctly answer the question.

13. The method of any one of claims 9 to 12, wherein the first machine learning model and the second machine learning model are trained to perform the question answering task prior to being subjected to the collaborative training; and/or

wherein the first machine learning model performs the question generation task by at least generating, based at least on an answer and a context, one or more corresponding questions.

14. The method of any one of claims 9 to 13, further comprising applying the collaboratively trained second machine learning model to perform the question answering task; and/or

wherein the first machine learning model comprises a transformer decoder network, and wherein the second machine learning model comprises a transformer encoder network.

15. A non-transitory computer readable medium storing instructions, which when executed by at least one data processor, result in operations comprising:

training a first machine learning model to perform a question generation task and a second machine learning model to perform a question answering task, the first machine learning model and the second machine learning model being subjected to a collaborative training in which a first plurality of weights applied by the first machine learning model generating one or more questions are adjusted to minimize an error in an output of the second machine learning model answering the one or more questions; and

applying the collaboratively trained first machine learning model to perform the question generation task.

**FIG. 1**

**FIG. 2A**

**ML Model 115a**

Decoder

Decoder

Decoder

Decoder

**Question Generation**

**SQuAD**

Annotated
Answer

Question

**SQuAD**

Answer

LM Backprop

**ML Model 115b**

Encoder

Encoder

Encoder

Encoder

**Answer Generation**

# FIG. 2B

Example 1:

"The Broncos defeated the Pittsburgh Steelers in the divisional round, 23–16, by scoring 11 points in the final three minutes of the game. They then beat the defending Super Bowl XLIX champion >>New England Patriots<< in the AFC Championship Game, 20–18, by intercepting a pass on New England's 2-point conversion attempt with 17 seconds left on the clock. Despite Manning's problems with interceptions during the season, he didn't throw any in their two playoff games."

GPT-2 LM: Which team did the Broncos beat in the AFC Championship Game?

GPT-2 Feedback: What team did the Broncos defeat in the AFC championship game?

GT: Who did the Broncos beat in the Super Bowl?

GT: Who won Super Bowl XLIX?

Example 2:

"The league eventually narrowed the bids to three sites: New Orleans' Mercedes-Benz Superdome, Miami's >>Sun Life Stadium<<, and the San Francisco Bay Area's Levi's Stadium."

GPT-2 LM: What is the name of the stadium in Miami?

GPT-2 Feedback: Which stadium did the league try to buy in Miami?

GPT-3 Feedback: What stadium is in Miami?

GT: What venue in Miami was a candidate for the site of Super Bowl 50?

Example 3:

"Highly concentrated sources of oxygen promote rapid combustion. Fire and explosion hazards exist when concentrated oxidants and fuels are brought into close proximity; an ignition event, such as heat or a spark, is needed to trigger combustion. Oxygen is the oxidant, not the fuel, but nevertheless the source of most of the chemical energy released in combustion. Combustion hazards also apply to >>compounds of oxygen with a high oxidative<< potential, such as peroxides, chlorates, nitrates, perchlorates, and dichromates because they can donate oxygen to a fire."

GPT-2 LM: How much did the world price of oil decline during the 1980s?

GPT-2 Feedback: The 1979 energy crisis was worth how much?

GPT-2 Feedback: What was the price of oil during the 1980s?

GT: Peroxides, nitrates and dichromates are examples of what type of compound?

FIG. 3

400

402

PRE-TRAIN FIRST MACHINE LEARNING MODEL AND SECOND MACHINE LEARNING MODEL TO PERFORM QUESTION ANSWERING TASK

404

COLLABORATIVELY TRAIN FIRST MACHINE LEARNING MODEL TO PERFORM QUESTION GENERATION TASK AND SECOND MACHINE LEARNING MODEL TO PERFORM QUESTION ANSWERING TASK INCLUDING BY ADJUSTING ONE OR MORE WEIGHTS APPLIED BY FIRST MACHINE LEARNING MODEL GENERATING ONE OR MORE QUESTIONS IN ORDER TO MINIMIZE ERROR IN OUTPUT OF SECOND MACHINE LEARNING MODEL ANSWERING ONE OR MORE QUESTIONS GENERATED BY FIRST MACHINE LEARNING MODEL

406

APPLY FIRST MACHINE LEARNING MODEL TO PERFORM QUESTION GENERATION TASK AND/OR SECOND MACHINE LEARNING MODEL TO PERFORM QUESTION ANSWERING TASK

# FIG. 4

FIG. 5

Europäisches
Patentamt
European
Patent Office
Office européen
des brevets

## EUROPEAN SEARCH REPORT

Application Number

**EP 21 19 0943**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TASSILO KLEIN ET AL: "Learning to Answer by Learning to Ask: Getting the Best of GPT-2 and BERT Worlds", ARXIV.ORG, CORNELL UNIVERSITY LIBRARY, 201 OLIN LIBRARY CORNELL UNIVERSITY ITHACA, NY 14853, 6 November 2019 (2019-11-06), XP081526182, * Abstract and Section 2; figures 1-3 * | 1-15 | INV. G06N3/04 G06N3/08 |
| | ----- | | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 1 February 2022 | Szymanski, Francois |

EPO FORM 1503 03.82 (P04C01)